# EUROPÄISCHE PATENTSCHRIFT

(11) **EP 2 318 258 B1**
(45) Veröffentlichungstag und Bekanntmachung des Hinweises auf die Patenterteilung: **11.06.2014**
(21) Anmeldenummer: 09776033.4
(22) Anmeldetag: 30.07.2009
(51) Int. Cl.: B62B 5/06

(54) **UMMANTELUNG FÜR DEN SCHIEBEGRIFF EINES TRANSPORTWAGENS**
SHELL FOR THE PUSHING HANDLE OF A TROLLEY
GAINE POUR LA POIGNÉE D'UN CHARIOT DE TRANSPORT

(30) Priorität: 30.07.2008 DE 202008010201 U
(43) Veröffentlichungstag der Anmeldung: 11.05.2011
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2009/001063
(87) Internationale Veröffentlichungsnummer: WO 2010/012274

(56) Entgegenhaltungen:
- WO-A-2005/006911
- DE-A1- 19 843 531
- US-A1- 2002 092 132
- US-B1- 6 817 066

## Beschreibung

### Technisches Gebiet

Die Erfindung betrifft die Ummantelung des Schiebegriffes für einen Transportwagen.

Es ist eine Vielzahl von Einkaufswagen in Benutzung, bei denen der Schiebegriff ein Rohr mit gebogenen Bereichen ist, welches fest mit dem Fahrgestell verbunden ist.

Die Ummantelung eines Schiebegriffes erfolgt bei der Produktion des Transportwagens nachdem der Schiebegriff fest mit dem Fahrgestell verbunden wurde. Ein Aufschieben der Ummantelung entlang der Achse des Schiebegriffes ist dann nicht mehr möglich.

Die bekannten Ummantelungen sind im wesentlichen zylinderförmige Kunststoffteile, die einem Schlitz aufweisen. Die Montage erfolgt, indem die Ummantelung parallel zum Schiebegriff angelegt wird und mit einer Kraft, die quer zur Achse des Schiebegriffes gerichtet ist - bei gleichzeitiger Spreizung des Schlitzes der Ummantelungen - über den Schiebegriff gedrückt wird.

Aufgrund der Elastizität des Materials schließt sich der Schlitz anschließend wieder, die Ummantelung schnappt somit über den Schiebegriff.

Als Verdrehsicherung hat die Ummantelung an ihrer Innenseite angeformte Zapfen, die mit Löchern im Schiebegriff korrespondieren.

Nachteilig bei den bekannten Ummantelungen ist die Tatsache, dass sie vollständig aus einem elastischen Material bestehen müssen, um über den Schiebegriff schnappen zu können. Durch diese Forderung an die Elastizität ist man nachteilig in der Materialauswahl eingeschränkt.

Die bekannten elastischen Materialien, die für die bekannten Ummantelungen verwendet werden haben in nachteiliger Weise eine Haptik, die oft als "klebend" empfunden wird.

Ein weiterer Nachteil der elastischen Ummantelungen ist darin zu sehen, dass beim normalen Gebrauch keine großen Hebelkräfte zwischen Ummantelung und Schiebegriff auftreten dürfen, da ansonsten die elastische Ummantelung wieder vom Schiebegriff abgezogen wird. Dies macht es nahezu unmöglich dass die Ummantelung eine von der Form des Schiebegriffes abweichende Form hat oder dass zusätzliche Elemente, beispielsweise eine Werbefläche in die Ummantelung integriert sind.

Die elastischen Materialien haben die Eigenschaft, dass sie sehr gut isolieren. Dies führt in nachteiliger Weise dazu, dass der Transportwagen nicht über die schiebende Person "geerdet" wird und die stets stattfindende elektrostatische Aufladung solange zunimmt, bis eine Spannung erreicht ist, die zu einem Überschlagfunken beim Berühren von Metallteilen des Transportwagens führt.

Derartige Ummantelungen sind aus dem DE 198 43 531 A1, dem US 6,817,066 B1 und dem US 2002/0092132 A1 bekannt. Das WO 2005/006911 A2 zeigt eine elastische, aus Lagen verschiedener Materialien aufgebaute Ummantelung für einen Griff, die um den Griff gewickelt werden kann.

### Offenbarung der Erfindung

### Technische Aufgabe

Es ist Aufgabe der Erfindung eine neuartige Ummantelung für Schiebegriffe zu schaffen, bei der man auch eine Kombination aus gering elastische Materialien und nicht elastischen Materialien verwenden kann und die Form der Ummantelung von der Form des Schiebegriffes abweicht.

Die Ummantelung hat eine wichtige Rolle hinsichtlich der Haptik und Ergonomie des gesamten Transportwagens daher ist die Form der Ummantelung ein wesentliches Merkmal. Ebenso wichtig sind die Materialeigenschaften der Ummantelung. Es ist daher eine weitere Aufgabe der Erfindung die Haptik, Ergonomie und die Materialeigenschaften eines Schiebgriffes zu verbessern.

### Technische Lösung

Diese Aufgabe wird gelöst durch die erfindungsgemäße Ummantelung des Schiebegriffes für einen Transportwagen.

Die Überlegungen, die zu der Entstehung der vorliegenden Erfindung geführt haben gingen davon aus, dass eine mehrteilige Ummantelung am Transportgriff montierbar ist, ohne dass hierzu das alle für die Ummantelung verwendeten Materialien elastisch sein müssen..

Die einzelnen Teile der Ummantelung werden formschlüssig untereinander und mit dem Schiebegriff verbunden. Der Formschluss der Teile ist beispielsweise durch Nut- und Feder Verbindungen realisierbar. Der Formschluss zwischen der Ummantelung und dem Schiebegriff erfolgt durch zusätzliche Elemente der erfindungsgemäßen Ummantelung, welche in den Schiebegriffes eingreifen.

### Vorteilhafte Wirkungen

Durch die vorliegende Erfindung ist es möglich, der Ummantelung eine Form zu geben, welche von der Form des Schiebegriffes abweichen kann.

Die einzelnen Bereiche der Ummantelung können aus unterschiedlichen Materialien bestehen. Hierdurch ist es möglich die einzelnen Bereiche gezielt aus einem Material herzustellen, welches für eine bestimmte - über die Grundfunktion der Schiebegriffummantelung hinausgehende - Spezialfunktion besonders gut geeignet ist.

Vorteilhaft ist es so möglich einen Bereich der Ummantelung transparent auszubilden, um hinter dem transparenten Bereich eine Werbefläche anzuordnen.

Auch ist es möglich einen anderen Bereich der Ummantelung elektrisch leitfähig zu gestalten, denn dadurch wird die elektrostatische Aufladung, die beim Schieben des Transportwagens entsteht stets über die schiebende Person abgeleitet.

Auch ist es möglich, die Ummantelung aus einem Ionen abgebenden Material herzustellen, um so möglichst alle Keime, welche durch den Benutzer des Transportwagens auf der Ummantelung hinterlassen wurden sofort wieder abzutöten, bevor der nächste Benutzer die Ummantelung berührt.

### Kurze Beschreibung der Zeichnungen

Nachfolgend wird die Erfindung anhand von mehreren Figuren näher erläutert.

Es zeigen:
Fig 1 einen Schiebegriff einer erfindungsgemäßen Ummantelung
Fig 2-4 eine Schnittdarstellung durch die Ummantelung
Fig. 5 eine Ausgestaltung einer Ummantelung mit mehreren Abschnitten
Fig. 6 die Verbindung zweier Abschnitte der Ummantelung
Fig. 7 eine weitere Ausgestaltung

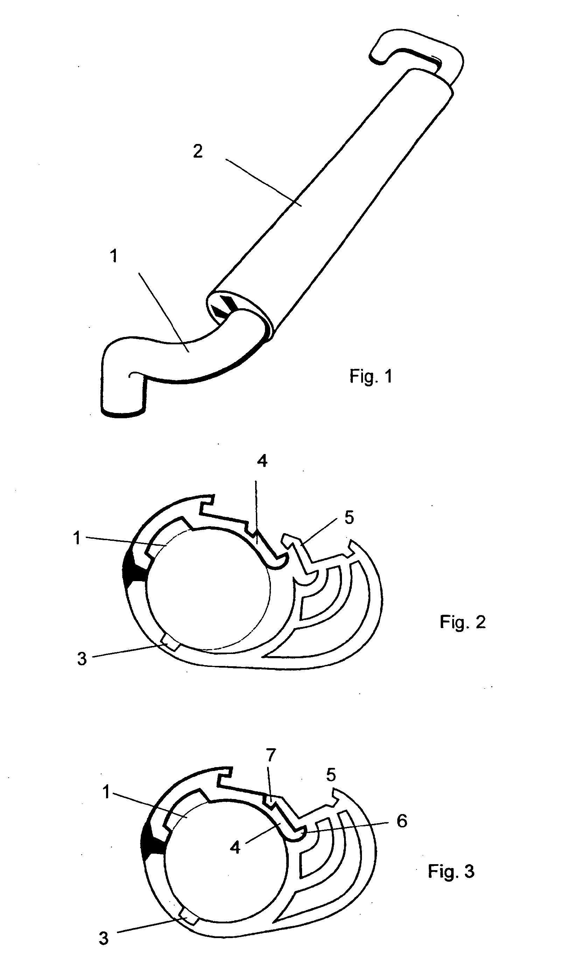

Die Figur 1 zeigt den Schiebegriff 1. Dieser Schiebegriff 1 ist fest am Fahrgestell des hier nicht gezeigten Einkaufswagens befestigt. Der Schiebegriff hat ein im wesentlichen gerades Mittelteil, an dem sich beidseitig ein gebogener Endbereich anschließt. Auf dem geraden Mittelteil des Schiebegriffes 1 ist die Ummantelung 2 montiert.

Die Figur 2 zeigt einen Schnitt durch die Ummantelung 2. Ein Bereich 3 ist relativ dünnwandig ausgebildet und ähnlich einem Filmscharnier flexibel. Die Bereiche 4 und 5 sind mit Nuten und Rastnasen versehen, deren Funktion später näher erläutert wird. Der flexible Bereich 3 ermöglicht es, dass die ansonsten gering elastische Ummantelung 2 aufgespreizt wird. Hierdurch ist es möglich die Ummantelung 2 quer zur Achse des Schiebgriffes 1 auf den Schiebegriff 1 aufzuschnappen.

Die Figur 3 zeigt die Ummantelung 2 in geschlossenem Zustand. Das Ende des Bereiches 4 liegt nun unter dem gegenüberliegenden Bereich 5.

Eine Rastnase 6 am Rand des Bereiches 4 und eine Rastnase 7 am Rand des Bereiches 5 greift jeweils in eine Nut am gegenüberliegenden Teil ein. Hierdurch ist die Ummantelung 2 gegen radiales Weiten gesichert.

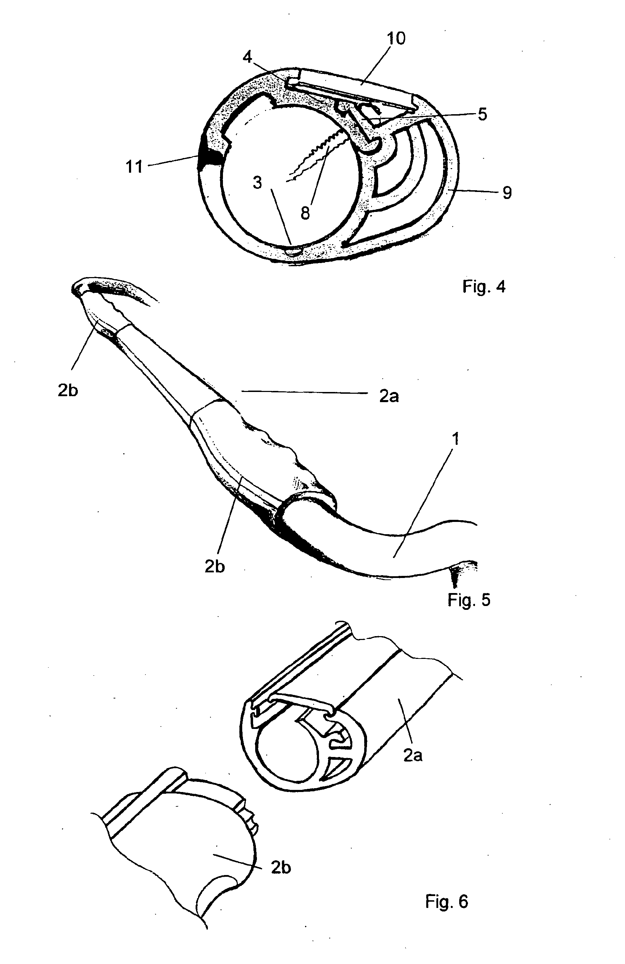

Die Figur 4 zeigt die fertig montierte Ummantelung 2 im Schnitt. Die beiden Bereiche 4 und 5 sind von einer Schraube 8 durchdrungen. Die Schraube 8 endet Ihrerseits im Schiebegriff 1.

Die Ummantelung 2 hat eine von der zylindrischen Form des Schiebegriffes 1 abweichende Form. In der Schnittdarstellung der Figur 4 ist der von der Achse des Schiebegriffes 1 am weitesten entfernte Bereich mit dem Bezugszeichen 9 versehen. Durch den Formschluss, den die Schraube 8 zwischen der Ummantelung 2 und dem Schiebegriff 1 herstellt, werden Kräfte, die im Bereich 9 auf die Ummantelung 2 einwirken auf den Schiebegriff 1 übertragen. Ein radiales Verdrehen der Ummantelung 2 auf dem Schiebegriff 1 ist nicht möglich, auch ein axiales Verschieben der Ummantelung 2 entlang des Schiebegriffes 1 ist nicht möglich.

Durch eine bündig eingesetzte Leiste 10 wird die Schraube 8 verdeckt. Die Leiste 10 kann auch aus einem transparenten Material bestehen, um als ein Sichtfenster für eine dahinter liegende bedruckbare Fläche zu dienen. Auf der bedruckbaren Fläche lassen sich Firmenlogos oder Werbeinformationen unterbringen.

Zusätzlich ist ein Bereich 11 aus einem elektrisch leitfähigerem Material in der Ummantelung 2 enthalten. Dieser elektrisch leitende Bereich 11 steht in Kontakt mit dem Schiebegriff 1 und dient dann zur gezielten, für den Benutzer jedoch nicht spürbaren Ableitung der beim Schieben des Transportwagens entstehenden elektrostatischen Aufladung.

Da man aufgrund der erfindungsgemäßen Konstruktion eine weite Auswahl an verwendbaren Materialien hat, besteht vorteilhaft die Möglichkeit für die Ummantelung 2 ein Material zu verwenden, welches antibakteriell wirkt und somit zu einer gesteigerten Hygiene vorteilhaft beiträgt. Auch ist es möglich für die Ummantelung insgesamt einen elektrisch leitfähigen Werkstoff zu verwenden oder einen Werkstoff, der aus einem nachwachsenden Rohstoff besteht.

Die Figur 5 zeigt eine Weiterbildung der Ummantelung. Die Ummantelung 2 besteht hier aus einem Mittelteil 2a und Seitenteilen 2b.

Das Mittelteil 2a weist ein Strangprofil auf, das schnell und günstig herstellbar ist.

Die Seitenteile 2b haben eine ergonomisch ausgeprägte Form. Im normalen Betrieb wird der Benutzer des Transportwagens hauptsächlich die Seitenteile 2b berühren. Es ist daher vorteilhaft möglich, den Aufwand für Materialien mit haptisch und hygienisch verbesserten Eigenschaften auf die Seitenteile 2b zu begrenzen und für das Mittelteil 2a preiswerte Materialien zu verwenden.

Durch eine einheitliche Farbgestaltung ergibt sich ein einheitliches Erscheinungsbild der gesamten Ummantelung 2.

Die Seitenteile 2b haben bevorzugt eine ergonomisch ausgeprägte Form mit einer Ballenauflage und Griffmulden.

Eine solche Form lässt sich nicht im Strangpress Verfahren herstellen, sondern im Formspritz Verfahren. Vorteilhafterweise wird als Material für die Seitenteile 2b ein Material verwendet, welches Ionen abgibt und hierdurch Keime an seiner Oberfläche abtöten kann.

Die Figur 6 zeigt in perspektivischer Darstellung den Verbindungsbereich zwischen dem Mittelteil 2a und dem Seitenteil 2b der Ummantelung 2. Das Seitenteil 2b lässt sich in das Mittelteil 2a einschieben und es ergibt sich kontinuierlicher Übergang zwischen den beiden Teilen mit Form und Kraftschluss.

In einer Weiterbildung der Erfindung ist es möglich ein verkürztes Mittelteil zu verwenden und den hierdurch auf dem Schiebegriff frei gewordenen Bereich für die Montage eines Funktionsteils zu verwenden.

Ein solches Funktionsteil würde integriert zwischen dem Seitenteil und dem Mittelteil der Ummantelung auf dem Schiebegriff angebracht sein. Als ein solches Funktionsteil ist ein Pfandschloss oder eine Halterung für einen Einkaufsassistenten am Griff anbringbar.

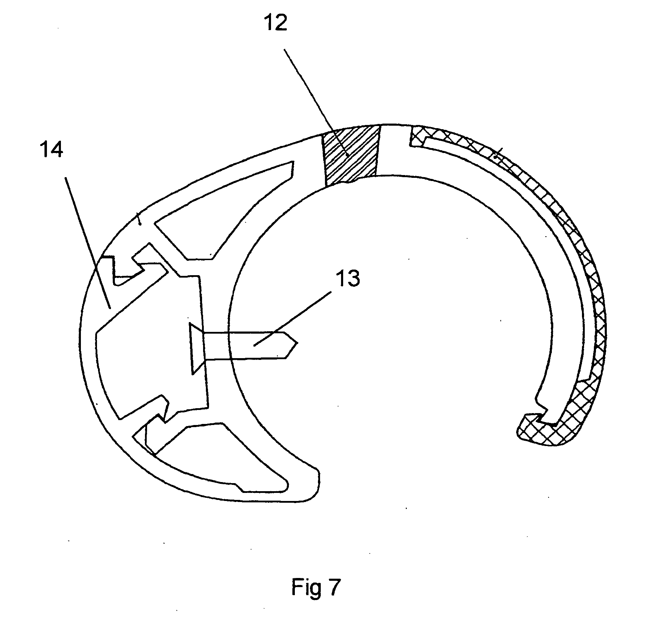

Die Figur 7 zeigt ein Ausführungsbeispiel, bei welchem die Ummantelung 12 das Griffrohr nicht vollständig umschließt. Ein Bereich von ca. 270-300 Grad des Griffrohres ist von der Ummantelung 12 bedeckt. Der nicht bedeckte Bereich ist so gewählt, dass er bei der Benutzung des Einkaufswagens nicht sichtbar ist.

Die Ummantelung 12 wird mit Stiften oder Schrauben 13 gegen seitliches Verschieben und radiales Verdrehen gesichert. Die Stifte 13 ragen in Löcher des Griffrohres, welche oftmals schon im Griffrohr vorhanden sind, denn weit verbreitet gibt es einfache Hüllen um das Griffrohr, die an ihrer Innenseite Noppen haben, welche in Löcher des Griffrohres eingreifen.

Die Stifte oder Schrauben 13 befinden sich bevorzugt in dem Bereich der Ummantelung 12, der oval ausgestaltet ist und ein gewisses Volumen aufweist. Durch einen Verschließclip 14 wird das Volumen, in welchem sich die Stifte oder Schrauben 13 befinden verschlossen, wodurch die Stifte oder Schrauben 13 nicht mehr sichtbar sind.

Insofern eignet sich die Ausführungsform gemäß Figur 7 besonders gut dafür, die einfachen Hüllen gegen die erfindungsgemäße Ummantelung - mit all ihren Vorteilen - auszutauschen.

Die vorliegende Erfindung bietet die Möglichkeit ein Material zu verwenden, welches antibakteriell wirkt und somit zu einer gesteigerten Hygiene vorteilhaft beiträgt. Auch ist es möglich einen elektrisch leitfähigen Werkstoff zu verwenden oder einen Werkstoff, der aus einem nachwachsenden Rohstoff besteht.

Die erfindungsgemäße Konstruktion erlaubt eine schnelle und einfache Montage und ermöglicht ebenso ein schnelles und einfaches Auswechseln der Ummantelung.

## Patentansprüche

1. Ummantelung für den Schiebegriff eines Transportwagens, wobei die Ummantelung (2) Bereiche aus verschiedenartigen Materialien aufweist,
**dadurch gekennzeichnet, dass**
das für Bereiche der Ummantelung (2) verwendete Material eine elektrisch leitende Wirkung aufweist, so dass die beim Schieben des Transportwagens entstehende elektrostatische Aufladung abgeleitet wird.

2. Ummantelung nach Anspruch 1,
**dadurch gekennzeichnet, dass**
die Ummantelung (2) mehrteilig ausgebildet ist und die einzelnen Teile (2a, 2b) der Ummantelung aus verschiedenen Materialien bestehen.

3. Ummantelung nach Anspruch 2,
**dadurch gekennzeichnet, dass**
die einzelnen Teile (2a, 2b) der Ummantelung (2a) formschlüssig untereinander und
mit dem Schiebegriff (1) verbunden sind.

4. Ummantelung nach einem der vorangegangenen Ansprüche,
**dadurch gekennzeichnet, dass**
die Ummantelung (2) eine Form aufweist, welche von der Form des Schiebegriffes (1) wesentlich abweicht.

5. Ummantelung nach einem der vorangegangenen Ansprüche,
**dadurch gekennzeichnet, dass**
das für die Ummantelung (2) oder für Bereiche der Ummantelung (2) verwendete Material eine antibakterielle Wirkung aufweist.

6. Ummantelung nach einem der vorangegangenen Ansprüche,
**dadurch gekennzeichnet, dass**
das für die Ummantelung (2) oder für Bereiche der Ummantelung (2) verwendete Material eine transparente Eigenschaft aufweist

7. Ummantelung nach einem der vorangegangenen Ansprüche,
**dadurch gekennzeichnet, dass**
die Seitenteile (2b) der Ummantelung (2) aus einem anderenMaterial bestehen als das Mittelteil (2a) der Ummantelung (2).

## Claims

1. Shell for the pushing handle of a trolley, wherein the shell (2) comprises regions of materials of different types, **characterized in that** the material used for regions of the shell (2) has an electrically conducting action so that the electrostatic charge produced when pushing the trolley is led off.

2. The shell according to claim 1, **characterised in that** the shell (2) is configured as multi-part and the individual parts (2a, 2b) of the shell consist of different materials.

3. The shell according to claim 2, **characterised in that** the individual parts (2a, 2b) of the shell (2a) are connected positively to one another and to the pushing handle (1).

4. The shell according to any one of the preceding claims, **characterised in that** the shell (2) has a shape which differs substantially from the shape of the pushing handle (1).

5. The shell according to any one of the preceding claims, **characterised in that** the material used for the shell (2) or for regions of the shell (2) has an anti-bacterial effect.

6. The shell according to any one of the preceding claims, **characterised in that** the material used for the shell (2) or for regions of the shell (2) has a transparent property.

7. The shell according to any one of the preceding claims, **characterised in that** the side parts (2b) of the shell (2) consist of a different material from the central part (2a) of the shell (2).

## Revendications

1. Enveloppe pour la poignée de poussée d'un chariot de transport, l'enveloppe (2) comportant des zones en matières de différents types, **caractérisée en ce que** la matière utilisée pour des zones de l'enveloppe (2) fait preuve d'un effet conducteur électrique, de sorte que la charge électrostatique issue de la poussée du chariot de transport soit détournée.

2. Enveloppe selon la revendication 1, **caractérisée en ce que** l'enveloppe (2) est conçue en plusieurs parties et **en ce que** les parties individuelles (2a, 2b) de l'enveloppe sont constituées de différentes matières.

3. Enveloppe selon la revendication 2, **caractérisée en ce que** les parties individuelles (2a, 2b) de l'enveloppe (2a) sont reliées par complémentarité de forme entre elles et avec la poignée de poussée (1).

4. Enveloppe selon l'une quelconque des revendications précédentes, **caractérisée en ce que** l'enveloppe (2) présente une forme qui diverge sensiblement de la forme de la poignée de poussée (1).

5. Enveloppe selon l'une quelconque de revendications précédentes, **caractérisée en ce que** la matière utilisée pour l'enveloppe (2) ou pour des zones de l'enveloppe (2) fait preuve d'un effet antibactérien.

6. Enveloppe selon l'une quelconque des revendications précédentes, **caractérisée en ce que** la matière utilisée pour l'enveloppe (2) ou pour des zones de l'enveloppe (2) présente une caractéristique transparente.

7. Enveloppe selon l'une quelconque des revendications précédentes, **caractérisée en ce que** les parties latérales (2b) de l'enveloppe (2) sont constituées d'une matière différente de celle de la partie centrale (2a) de l'enveloppe (2).
